# EUROPÄISCHE PATENTSCHRIFT

(11) **EP 2 664 426 B1**
(45) Veröffentlichungstag und Bekanntmachung des Hinweises auf die Patenterteilung: **02.11.2016**
(21) Anmeldenummer: 13002388.0
(22) Anmeldetag: 04.05.2013
(51) Int. Cl.: B27G 19/00, B25H 3/00, B23Q 13/00

(54) **Kettenschutz und Kettensägensystem**
Chain guard and chain saw system
Protection de chaîne et système de scie à chaîne

(30) Priorität: 15.05.2012 DE 102012009660
(43) Veröffentlichungstag der Anmeldung: 20.11.2013
(73) Patentinhaber: Andreas Stihl AG & Co. KG, 71336 Waiblingen (DE)
(72) Erfinder: Schell, Berthold, D-71522 Backnang (DE)
(74) Vertreter: Zurhorst, Stefan

(56) Entgegenhaltungen:
- US-A- 4 369 575

## Beschreibung

Die Erfindung betrifft einen Kettenschutz für Schneidgarnituren der im Oberbegriff des Anspruchs 1 angegebenen Gattung sowie ein Kettensägensystem mit einem derartigen Kettenschutz.

Ein solcher Kettenschutz sowie ein Kettensägesystem werden von der US 4369575 A offenbart.

Motorisch angetriebene Kettensägen der üblichen Bauform umfassen eine Schneidgarnitur mit einer vom Antriebsmotor der Kettensäge antreibbaren Schneidkette und mit einer Führungsschiene, an deren äußeren Kante die Schneidkette umläuft. Für den Transport oder die Lagerung der Kettensäge wird ein Kettenschutz auf die Schneidgarnitur aufgeschoben, der in üblicher Bauform eine Einfädelöffnung für die Schneidgarnitur aufweist und im Übrigen als geschlossener Kasten mit zwei sich gegenüberliegenden Seitenwänden zur Abdeckung von Seitenflächen der Schneidgarnitur ausgebildet ist. Durch die mit Ausnahme der Einfädelöffnung insgesamt geschlossene Bauform des Kettenschutzes ist die Schneidgarnitur insgesamt abgedeckt. Einerseits wird die Schneidgarnitur dadurch vor äußeren Einflüssen wie Verschmutzung oder dgl. geschützt. Andererseits wird auch die Umgebung gegen Schmutz, Öl und die scharfen Schneiden der Schneidkette vor Verschmutzung und Beschädigung geschützt.

Für einen zuverlässigen Sitz des Kettenschutzes auf der Schneidgarnitur sollte die Länge des Kettenschutzes an die Länge der Schneidgarnitur angepasst sein. Für unterschiedliche Arbeitsaufgaben werden aber am gleichen Grundgerät der Kettensäge Schneidgarnituren unterschiedlicher Länge eingesetzt, weshalb für jede zum Einsatz kommende Schneidgarnitur jeweils ein eigener Kettenschutz mit angepasster Länge erforderlich ist. Dies ist für den Benutzer umständlich in der Handhabung, da er eine entsprechende Vielzahl von Teilen mitführen muss, die einen entsprechenden Stauraum erfordern.

Als Alternative ist es bekannt, einen Kettenschutz kurzer Bauform für eine kurze Schneidgarnitur als Basiseinheit bereitzustellen, die mit entsprechenden Verlängerungsstücken an längere Schneidgarnituren angepasst werden kann. Hierdurch wird zwar der erforderliche Stauraum für die mitzuführenden Teile verringert. Die Handhabung der genannten Verlängerungen ist aber ähnlich umständlich wie die Handhabung von Kettenschutzen mit unterschiedlicher Länge. Außerdem hat sich in der Praxis gezeigt, dass die Schneidgarnitur beim Einfädeln an der Schnittstelle zwischen Verlängerung und Basiskettenschutz hängen bleiben oder sich sogar zwischen beide Teile einfädeln kann.

Das Aufstecken eines zu kurzen Kettenschutzes auf eine zu lange Schneidgarnitur ist nachteilhaft, weil hierbei die Schneidgarnitur nicht vollständig abgedeckt wird. Umgekehrt ist bei einem zu langen Kettenschutz auf einer kürzeren Schneidgarnitur eine zu geringe oder fehlende Klemmkraft zu beobachten, die in Verbindung mit der schlechten Passform zu einem Abfallen des Kettenschutzes führen kann.

Der Erfindung liegt die Aufgabe zugrunde, einen gattungsgemäßen Kettenschutz derart weiterzubilden, dass sein Einsatzbereich bei guter Schutzwirkung und Haltekraft erweitert ist.

Diese Aufgabe wird durch einen Kettenschutz mit den Merkmalen des Anspruchs 1 gelöst.

Der Erfindung liegt des Weiteren die Aufgabe zugrunde, ein Kettensägensystem mit vereinfachter Handhabung beim Transport und beim Verstauen unter Verwendung von Schneidgarnituren unterschiedlicher Länge anzugeben.

Diese Aufgabe wird durch ein Kettensägensystem mit den Merkmalen des Anspruchs 11 gelöst.

Nach der Erfindung ist vorgesehen, dass in mindestens einer Seitenwand des Kettenschutzes im Bereich seines vorderen Endes eine erste Rastvertiefung und in Richtung zur Einfädelöffnung mit Abstand zur ersten Rastvertiefung mindestens eine zweite Rastvertiefung ausgebildet sind, wobei die erste Rastvertiefung und die zweite Rastvertiefung zum vorderen Ende des Kettenschutzes hin je eine bogenförmige Rastfläche zur formschlüssigen, in Richtung der Längsachse des Kettenschutzes wirkenden Verrastung mit den Schneidketten von Schneidgarnituren unterschiedlicher Länge aufweisen. Insbesondere sind in beiden Seitenwänden des Kettenschutzes jeweils sich gegenüberliegende erste Rastvertiefungen und zweite Rastvertiefungen ausgebildet. Bevorzugt sind sie spiegelsymmetrisch zueinander angeordnet.

Bei dem erfindungsgemäßen Kettenschutz bzw. bei dem erfindungsgemäßen Kettensägensystem mit einem solchen Kettenschutz können zumindest zwei verschiedene Schneidgarnituren unterschiedlicher Länge zum Einsatz kommen, wobei für beide Schneidgarnituren der gleiche Kettenschutz eingesetzt werden kann. Im Falle der längeren Schneidgarnitur erfolgt eine Verrastung des Kettenschutzes an der Schneidgarnitur direkt am vorderen Ende des Kettenschutzes mittels der dort angeordneten bogenförmigen Rastfläche. Dabei wird ein Formschluss mit der Schneidkette hergestellt. Der Formschluss am vorderen Ende bewirkt eine zuverlässige Halterung des Kettenschutzes, so dass dieser nicht ungewollt abfallen kann. Das Gleiche gilt aber auch bei der Verwendung des gleichen Kettenschutzes an einer Schneidgarnitur mit kürzerer Länge. In diesem Fall wird die formschlüssige Verrastung mittels der zweiten Rastvertiefung des Kettenschutzes und der daran ausgebildeten zweiten bogenförmigen Rastfläche hergestellt. Diese wirkt ebenfalls am vorderen Ende der Schneidgarnitur, obwohl diese kürzer als die erstgenannte Schneidgarnitur und auch kürzer als der Kettenschutz ist. In beiden Fällen kommt eine gleichwirkende formschlüssige Verrastung zum Tragen, die durch Hintergreifen der Schneidkette in Richtung der Längsachse des Kettenschutzes wirkt und dadurch zuverlässig ein unbeabsichtigtes Abziehen des Kettenschutzes unabhängig von der Wahl der Länge der Schneidgarnitur sicherstellt. Durch die Bogenform, insbesondere durch eine Kreisbogenform der Rastflächen wird eine zumindest näherungsweise flächige Anlage dieser Rastflächen an der jeweiligen Schneidkette dort erreicht, wo sie ebenfalls bogenförmig um das vordere Ende der Führungsschiene herumgeführt ist. Hierdurch ist eine zuverlässige Rast- und Klemmwirkung unter Vermeidung von örtlichen Kraftspitzen sichergestellt, die im Übrigen unempfindlich gegen Verschmutzungseinflüsse oder dgl. ist.

Es kann ausreichen, dass die mindestens zwei Rastvertiefungen auf nur einer Seitenwand des Kettenschutzes oder alternierend angeordnet sind. Durch die paarweise und insbesondere spiegelsymmetrische Anordnung auf beiden Seitenwänden sind symmetrische Kräfteverhältnisse geschaffen, die ein Verkanten beim Aufstecken und Abziehen vermeiden und dadurch die Handhabung erleichtern. Außerdem lassen sich hierdurch größere bzw. besser definierte Klemm- und Rastkräfte erzeugen.

Vorteilhaft weisen diese Rastflächen bezogen auf die zugeordnete Seitenwand einen Schrägungswinkel auf, der in einem Bereich von einschließlich 30° bis einschließlich 60° liegt und insbesondere zumindest näherungsweise 45° beträgt. Die genannten Zahlenwerte für den Schrägungswinkel stellen einerseits eine zuverlässige Rastwirkung sicher und erlauben andererseits ein gewolltes und durch den Benutzer aktiv herbeigeführtes Abziehen des Kettenschutzes mit einer definierten Handkraft.

Die erste Rastvertiefung und/oder die zweite Rastvertiefung weisen vorteilhaft zur Einfädelöffnung des Kettenschutzes hin eine Einfädelschräge auf. Der Kettenschutz ist vorzugsweise aus einem elastisch nachgiebigen Material, insbesondere aus elastisch nachgiebigem Kunststoff. Die Einfädelschräge spreizt die Rastvertiefungen unter Ausnutzung der elastischen Nachgiebigkeit des Kettenschutzes beim Aufschieben auf die Schneidgarnitur derart auf, dass der Kettenschutz mit geringer und gleichmäßiger Handkraft ohne Verkanten oder Verhaken aufgeschoben werden kann.

Die Einfädelschräge weist bezogen auf die zugeordnete Seitenwand einen mittleren Schrägungswinkel auf, der zweckmäßig in einem Bereich von einschließlich 5° bis einschließlich 20° liegt und insbesondere zumindest näherungsweise 10° beträgt. Dabei kann es zweckmäßig sein, dass die Einfädelschräge in der Einfädelrichtung einen geradlinigen Verlauf aufweist. Vorteilhaft ist sie aber in der Einfädelrichtung konkav gekrümmt ausgebildet. Gute Zentrierwirkung und mäßige Handkräfte sind hierdurch miteinander kombiniert.

Der erfindungsgemäße Kettenschutz weist in bevorzugter Weiterbildung ausgehend von seiner Einfädelöffnung einen den Querschnitt des Kettenschutzes verengenden Einfädeltrichter auf. Dieser erleichtert das Aufschieben des Kettenschutzes auf die Schneidgarnitur.

In einer bevorzugten Ausführungsform sind in mindestens einer Seitenwand und bevorzugt in beiden Seitenwänden des Kettenschutzes im Bereich seiner Einfädelöffnung Zentriervertiefungen für die Schneidgarnitur ausgebildet, wobei die Zentriervertiefungen zur seitlichen Anlage an den Seitenflächen der Führungsschiene der Schneidgarnitur vorgesehen sind. Neben der formschlüssigen Verrastung am vorderen Ende erfährt der Kettenschutz auch eine räumliche Fixierung an seinem hinteren, im Bereich der Einfädelöffnung liegenden Ende, so dass der Kettenschutz wackel- und verkantungsfrei seine vorgesehene Lage beibehält und nicht so leicht unbeabsichtigt abrutschen kann. Dabei kann es zweckmäßig sein, dass sich der Einfädeltrichter ausgehend von der Einfädelöffnung bis hin zur Zentriervertiefung erstreckt. Der Einfädeltrichter übernimmt dabei in Doppelfunktion auch die Aufspreizfunktion für die Zentriervertiefungen, wie sie weiter oben auch im Zusammenhang mit den Einfädelschrägen beschrieben ist. Durch das unmittelbare Angrenzen des Einfädeltrichters an die Zentriervertiefung ist der Bauraum optimal ausgenutzt, so dass ein möglichst großer Abstand zwischen den Rastvertiefungen und den Zentriervertiefungen hergestellt ist. Hierdurch erhält der Kettenschutz seine räumliche Fixierung entlang einer möglichst langen Strecke, was der Lagegenauigkeit zugutekommt.

Die Schneidketten weisen eine Breite auf, während zwischen sich gegenüberliegenden ersten Rastvertiefungen bzw. zweiten Rastvertiefungen ein freier Abstand verbleibt, der vorteilhaft kleiner ist als die Breite der Schneidkette. Hierdurch ist eine formschlüssige Verrastung der Rastvertiefungen mit der jeweiligen Schneidkette der jeweils zum Einsatz kommenden Führungsschiene sichergestellt. Insbesondere kann es dabei zweckmäßig sein, dass der genannte freie Abstand zwischen den Rastvertiefungen auch kleiner als die Dicke der Führungsschiene ist. Zu der vorstehend beschriebenen formschlüssigen Rastwirkung kommt dann auch noch eine seitliche Klemmwirkung, die durch die elastisch federnd vorgespannte klemmende und reibende Anlage der Rastvertiefungen an den Seitenflächen der Führungsschiene herbeigeführt wird.

Die Rastflächen weisen in der seitlichen Draufsicht auf die zugeordnete Seitenwand bevorzugt einen zweiten Radius auf, der ≤ einem ersten Radius des freien Endes an der Führungsschiene zur Umlenkung der jeweiligen Schneidkette ist. Dies trägt zur flächigen und verschmutzungstoleranten rastenden Anlage zwischen Rastfläche und Schneidkette bei.

Ein Ausführungsbeispiel der Erfindung ist nachfolgend anhand der Zeichnung näher beschrieben. Es zeigen:
- Fig. 1: in einer perspektivischen Übersichtsdarstellung ein erfindungsgemäßes Kettensägensystem mit einer Kettensäge sowie mit einem Kettenschutz für auswechselbare Schneidgarnituren;
- Fig. 2: in einer Seitenansicht eine von mindestens zwei verschiedenen Schneidgarnituren des Kettensägensystems nach Fig. 1 mit aufgestecktem Kettenschutz, wobei geometrische Einzelheiten zur Ausgestaltung von Rastvertiefungen und Zentriervertiefungen erkennbar sind;
- Fig. 3: die Anordnung nach Fig. 2 mit einer Darstellung des Kettenschutzes im Längsschnitt und mit Einzelheiten zur Ausgestaltung der Schneidgarnitur in langer Bauform;
- Fig. 4: in einer Draufsicht die Anordnung nach Fig. 3 mit geschnittenem Kettenschutz zur Darstellung der Wechselwirkung zwischen den Rastvertiefungen bzw. Zentriervertiefungen und der Schneidgarnitur;
- Fig. 5: eine vergrößerte Detaildarstellung der Anordnung nach Fig. 4 im Bereich ihrer Rastvertiefungen mit Einzelheiten zu deren geometrischer Ausgestaltung;
- Fig. 6: eine vergrößerte Detaildarstellung der Anordnung nach Fig. 4 im Bereich des Einfädeltrichters und der Zentriervertiefungen mit Details zu deren geometrischen Ausgestaltungen;
- Fig. 7: die Anordnung nach Fig. 3 mit einer alternativ zum Einsatz kommenden kürzeren Schneidgarnitur;
- Fig. 8: die Anordnung nach Fig. 4 mit der kürzeren Schneidgarnitur nach Fig. 5 im Wechselspiel mit den hinteren Rastvertiefungen des aufgeschobenen Kettenschutzes.

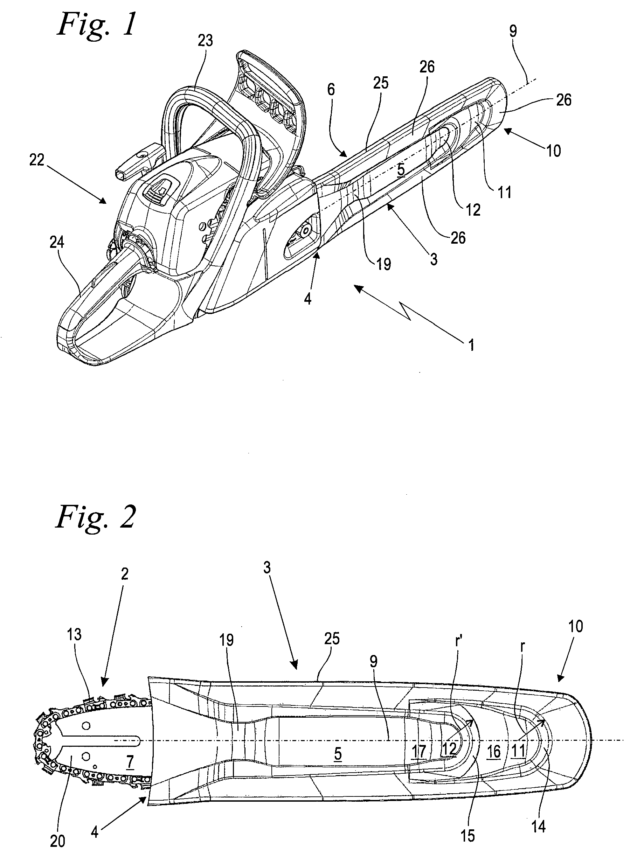

Fig. 1 zeigt in einer perspektivischen Darstellung ein erfindungsgemäß ausgeführtes Kettensägensystem, welches eine Kettensäge 1 mit verschiedenen, auswechselbaren und unterschiedliche Längen L, L' aufweisenden Schneidgarnituren 2, 2' umfasst, die in den Figuren 2 bis 8 dargestellt sind. Außerdem weist das Kettensägensystem einen Kettenschutz 3 auf, der bei Nichtbenutzung der Kettensäge 1, also beim Transport und beim Verstauen auf die jeweils an der Kettensäge 1 montierte Schneidgarnitur 2, 2' (Figuren 2 bis 8) aufgeschoben werden kann.

Die Kettensäge 1 weist ein Motorgehäuse 22 auf, in dem ein nicht näher dargestellter Antriebsmotor angeordnet ist. Außerdem ist am Motorgehäuse 22 ein vorderer Handgriff 23 und ein hinterer Handgriff 24 zum Führen der Kettensäge 1 beim Sägen angeordnet.

Der Kettenschutz 3 ist als ringsum geschlossener Kasten aus Kunststoff mit einer Wandstärke von ca. 1,5 mm ausgebildet und weist zwei sich gegenüberliegende Seitenwände 5, 6 und eine an der Schmalseite umlaufende Umfangswand 25 auf. Als einzige Ausnahme von der ansonsten insgesamt geschlossenen Bauweise ist am Kettenschutz 3 auf seiner dem Motorgehäuse 22 zugewandten Seite eine Einfädelöffnung 4 vorgesehen, mittels derer der Kettenschutz 3 auf die jeweils an der Kettensäge 1 montierte Schneidgarnitur 2, 2' (Figuren 2 bis 8) so weit aufgeschoben werden kann, dass die um die Einfädelöffnung 4 umlaufende Kante des Kettenschutzes 3 bevorzugt zumindest näherungsweise spaltfrei am Gehäuse der Kettensäge 1 anliegt, wodurch die jeweils montierte Schneidgarnitur 2, 2' (Figuren 2 bis 8) zumindest näherungsweise vollständig mittels des Kettenschutzes 3 abgedeckt wird.

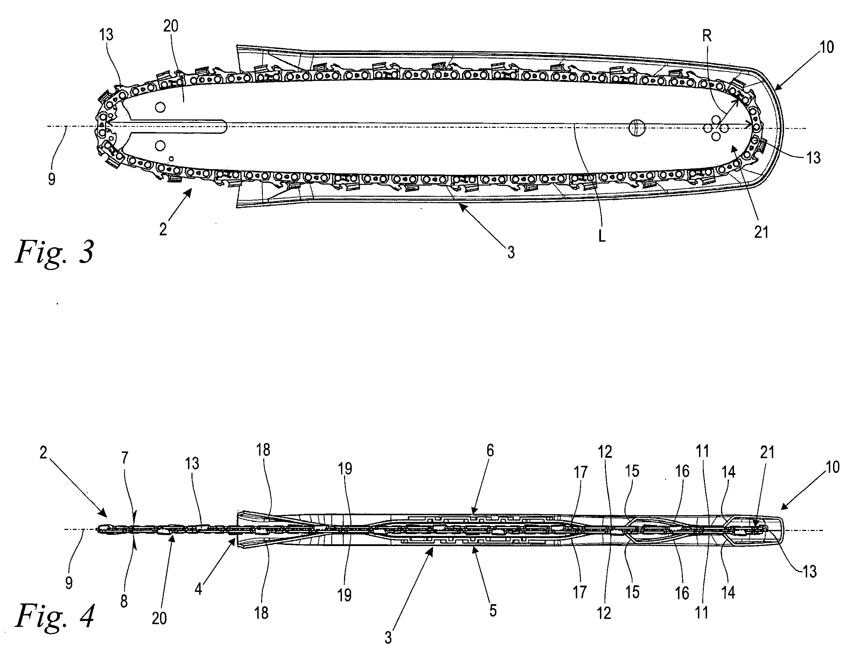

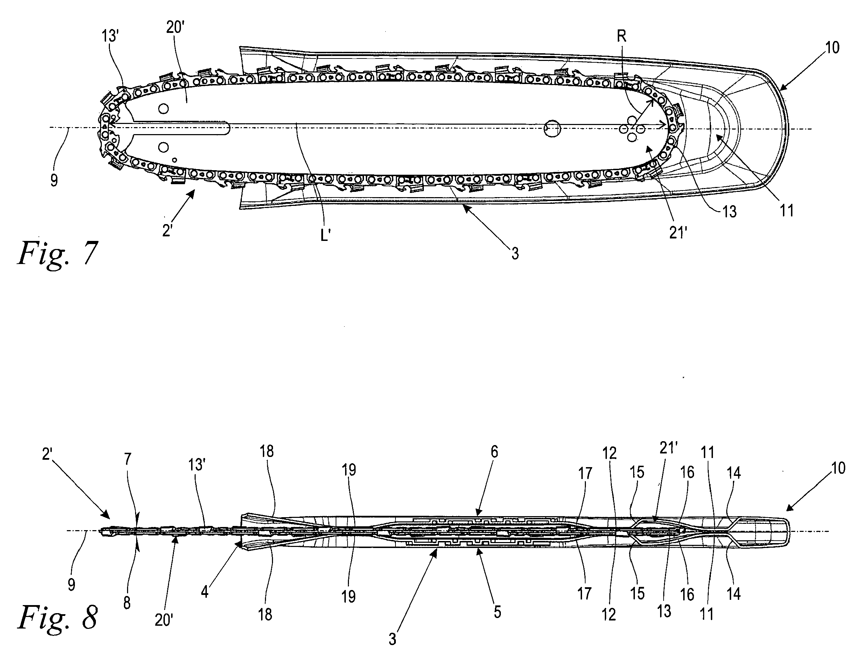

Aus der Zusammenschau der Figuren 2 bis 8 ergibt sich, dass die verschiedenen Schneidgarnituren 2, 2'jeweils eine Führungsschiene 20, 20' mit an deren Umfangskanten umlaufenden Schneidketten 13, 13' umfassen. Im Betrieb werden die Schneidketten 13, 13' vom nicht dargestellten Antriebsmotor der Kettensäge 1 (Fig. 1) umlaufend angetrieben. In der Darstellung nach Fig. 1 ist erkennbar, dass korrespondierend zu den Schneidketten 13, 13' im Bereich der Umfangswand 25 des Kettenschutzes 3 ein umlaufender Aufnahmekanal 26 mit geeigneter Breite zur Aufnahme der Schneidketten 13, 13' ausgebildet ist. Gegenüber diesem umlaufenden Aufnahmekanal 26 sind die Seitenwände 5, 6 des Kettenschutzes 3 zu dessen Innenraum hin nach innen versetzt und decken Seitenflächen 7, 8 der jeweiligen Führungsschiene 20, 20' (Figuren 4, 8) ab.

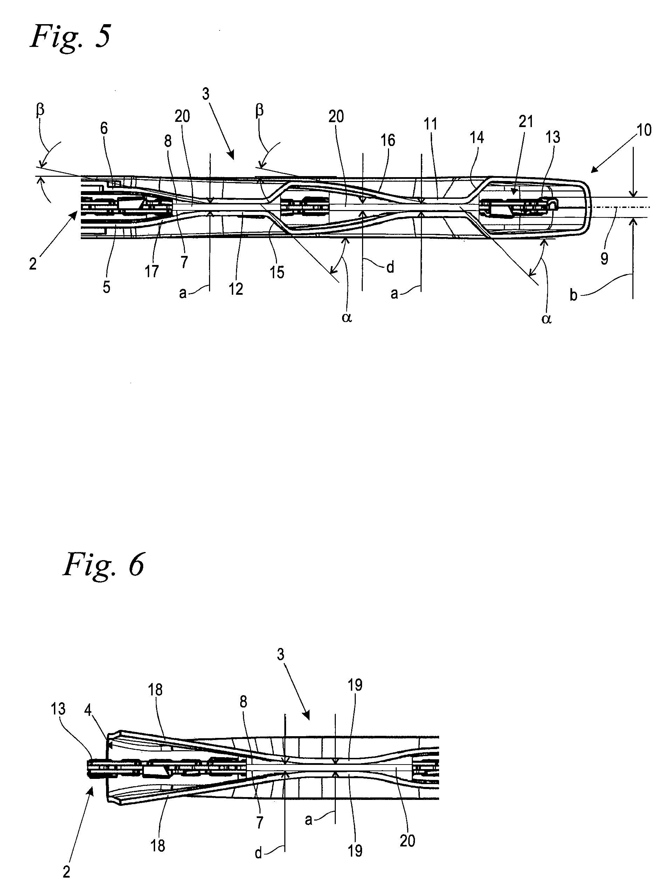

Der Kettenschutz 3 erstreckt sich entlang einer Längsachse 9 und weist bezogen auf seine Längsachse 9 ein vorderes, der Einfädelöffnung 4 gegenüberliegendes Ende 10 auf, wie dies beispielsweise in den Figuren 1, 2 dargestellt ist. Insbesondere in der perspektivischen Darstellung nach Fig. 1 ist erkennbar, dass in mindestens einer Seitenwand 5, 6 des Kettenschutzes 3 im Bereich seines vorderen Endes 10 eine erste Rastvertiefung 11 ausgebildet ist. Außerdem ist in mindestens einer Seitenwand 5, 6 in Richtung zur Einfädelöffnung 4, also hinter der ersten Rastvertiefung 11 mindestens eine zweite Rastvertiefung 12 ausgebildet. Zusätzlich können noch weitere Rastvertiefungen für weitere Schneidgarnituren mit abweichender Länge vorgesehen sein. Insbesondere aus der vergrößerten Detaildarstellung nach Fig. 5 ergibt sich, dass in beiden Seitenwänden 5, 6 des Kettenschutzes 3 jeweils sich gegenüberliegende Paare von ersten Rastvertiefungen 11 und zweiten Rastvertiefungen 12 ausgebildet und dabei spiegelsymmetrisch zueinander angeordnet sind.

Außerdem ist in den Seitenwänden 5, 6 nahe der Einfädelöffnung 4 noch ein Paar von spiegelsymmetrisch sich gegenüberliegenden Zentriervertiefungen 19 ausgeformt. Der hier und nachfolgend gewählte Begriff der Vertiefungen bezieht sich darauf, dass die genannten Vertiefungen, also die Rastvertiefungen 11, 12 und die Zentriervertiefungen 19 ausgehend von den Seitenwänden 5, 6 des Kettenschutzes 3 nach innen zum Innenraum des Kettenschutzes 3 hin ausgewölbt sind.

Einzelheiten der in Fig. 1 dargestellten Rastvertiefungen 11, 12 lassen sich in der seitlichen Draufsicht nach Fig. 2 erkennen, demnach die vordere, nahe zum vorderen Ende 10 liegende Rastvertiefung 11 auf ihrer zum vorderen Ende 10 hin weisenden Seite eine Rastfläche 14 und auf ihrer zur Einfädelöffnung 4 hin weisenden Rückseite eine Einfädelschräge 16 umfasst. Analog dazu ist die hintere, sich unmittelbar an die Einfädelschräge 16 nach hinten zur Einfädelöffnung 4 hin anschließende Rastvertiefung 12 mit einer vorderen Rastfläche 15 und einer hinteren Einfädelschräge 17 versehen. Die beiden Rastflächen 14, 15 sind bogenförmig, genauer kreisbogenförmig mit einem gleichen, zweiten Radius r bzw. r' ausgeführt. Aufgrund der oben beschriebenen Spiegelsymmetrie gilt das Gleiche auch für die Rastvertiefungen 11, 12 in der gegenüberliegenden Seitenwand 6, wie dies beispielsweise in Fig. 5 erkennbar ist.

Fig. 3 zeigt in einer Seitenansicht die Anordnung nach Fig. 2, bei der der Kettenschutz 3 geschnitten dargestellt ist. Der Kettenschutz 3 ist hierbei auf eine erste Schneidgarnitur 2 mit einer Länge L aufgeschoben. Die Schneidgarnitur 2 bzw. deren Führungsschiene 20 weisen ein freies Ende 21 auf. Die Länge des Kettenschutzes ist derart bemessen, dass der Kettenschutz 3 im aufgesteckten Zustand nach Fig. 1 mit seinem äußeren bzw. vorderen Ende 10 unmittelbar bis an das freie Ende 21 der Führungsschiene 20 und die dort mit einem ersten Radius R umgelenkte Schneidkette 13 heranreicht.

In Fig. 7 ist die Anordnung nach Fig. 3 dargestellt, wobei eine im Vergleich zur Schneidgarnitur 2 nach Fig. 3 kürzere Schneidgarnitur 2' als Alternative an der Kettensäge 1 (Fig. 1) montiert ist. Der gleiche Kettenschutz 3 ist hier auf die kürzere Schneidgarnitur 2' aufgeschoben und nimmt dabei die Position nach Fig. 1 ein. Es ist zu erkennen, dass das freie Ende 21' der kürzeren Führungsschiene 20' mit der Schneidkette 13' nicht bis zum vorderen Ende 10 des Kettenschutzes 3 reicht, sondern bezogen auf die Längsachse 9 des Kettenschutzes 3 mit Abstand zum vorderen Ende 10 hinter der ersten Rastvertiefung 11 zu liegen kommt. In den übrigen Merkmalen und Bezugszeichen stimmt die kürzere Schneidgarnitur 2' mit der längeren Schneidgarnitur 2 nach Fig. 3 überein, wobei auch die kürzere Schneidkette 13' mit dem gleichen ersten Radius R am freien Ende 21' der Führungsschiene 20' umgelenkt wird.

Fig. 4 zeigt in einer Draufsicht die Anordnung nach Fig. 3, wobei der Kettenschutz 3 geschnitten dargestellt ist. Der Kettenschutz 3 ist in dieser Ansicht insgesamt symmetrisch zu seiner Längsachse 9 aufgebaut. Dies ist weiter oben schon für die Rastvertiefungen 11, 12 mit den zugehörigen Rastflächen 14, 15 und Einfädelschrägen 16, 17 beschrieben und gilt außerdem für das Paar von sich gegenüberliegenden Zentriervertiefungen 19 in den Seitenwänden 5, 6. Die beiden Zentriervertiefungen 19 liegen mit Abstand zu den Rastvertiefungen 11, 12 bezogen auf die Längsachse 9 und das vordere Ende 10 am hinteren Ende des Kettenschutzes 3 nahe der Einfädelöffnung 4. Außerdem weist der Kettenschutz 3 ausgehend von seiner Einfädelöffnung 4 einen den Querschnitt des Kettenschutzes 3 verengenden Einfädeltrichter 18 auf, der sich ausgehend von der Einfädelöffnung 4 bis zu den Zentriervertiefungen 19 hin erstreckt.

Weiter ist in Fig. 4 zu erkennen, dass die lange Schneidgarnitur 2 nach Fig. 3 in den Kettenschutz 3 eingeschoben ist. Umgekehrt ausgedrückt ist der Kettenschutz 3 auf die Schneidgarnitur 2 in die Position nach den Figuren 1 und 3 aufgeschoben. Hierbei wird das freie Ende 21 der Schneidgarnitur 2 zunächst in den Einfädeltrichter 18 eingeschoben und dann zwischen den Zentriervertiefungen 19, den zweiten Rastvertiefungen 12 und den ersten Rastvertiefungen 11 hindurch bis zum vorderen Ende 10 des Kettenschutzes 3 eingeführt.

Fig. 5 zeigt in einer vergrößerten Detaildarstellung die Anordnung nach Fig. 4 im Bereich des vorderen Endes 10 bzw. des freien Endes 21, wobei der besseren Übersichtlichkeit halber die Schneidkette 13 nur abschnittsweise dargestellt ist, um eine Draufsicht der Führungsschiene 20 in den verbleibenden Abschnitten sichtbar zu machen.

Es ist zu erkennen, dass die Schneidkette 13 eine Breite b aufweist, während die Führungsschiene 20 im Vergleich dazu eine geringere Dicke d aufweist. Zwischen den sich gegenüberliegenden ersten Rastvertiefungen 11 und auch zwischen den sich gegenüberliegenden zweiten Rastvertiefungen 12 verbleibt ein freier Abstand a. Dieser freie Abstand a ist kleiner als die Breite b der Schneidkette 13, so dass die vorderen, ersten Rastvertiefungen 11 die Schneidkette 13 formschlüssig rastend im Bereich des freien Endes 21 der Schneidgarnitur 2 derart in Richtung der Längsachse 9 hintergreifen, dass der Kettenschutz 3 in Richtung der Längsachse 9 nicht nach vorne selbsttätig abfallen kann. Aufgrund des elastisch nachgiebigen Kunststoffmaterials des Kettenschutzes 3 kann dieser aber mit seinen Rastvertiefungen 11, 12 und auch Zentriervertiefungen 19 (Figuren 4, 6) nach vorne über die Schneidkette 13 bzw. das freie Ende 21 abgezogen werden. Im gesicherten und verrasteten Zustand nach den Figuren 3, 4 und 5 liegen aber die in Fig. 2 dargestellten, den ersten Rastvertiefungen 11 zugeordneten Rastflächen 14 mit ihrem zweiten Radius r am freien Ende 21 innenseitig an der Schneidkette 13 mit dem ersten Radius R (Fig. 3) rastend und flächig an, wodurch die gewünschte formschlüssige Lagesicherung des Kettenschutzes 3 an der Schneidgarnitur 2 sichergestellt ist. Der zweite Radius r der Rastfläche 14 (Fig. 2) ist dabei vorteilhaft ≤ dem ersten Radius R des freien Endes 21 nach Fig. 3, wodurch eine zumindest näherungsweise flächige Anlage zwischen der Rastfläche 14 (Fig. 2) und der Schneidkette 13 im Bereich des freien Endes 21 (Figuren 3 bis 5) herbeigeführt wird.

Optional kann der Abstand a zwischen den Rastvertiefungen 11 und auch zwischen den Rastvertiefungen 12 noch etwas kleiner sein als die Dicke d der Führungsschiene 20. Hierdurch ist erreicht, dass zusätzlich zum vorstehend beschriebenen rastenden Formschluss noch eine Klemmwirkung erreicht wird, die durch einen mit Vorspannung elastisch federnden Andruck der Rastvertiefungen 11, 12 an die Seitenflächen 7, 8 der Führungsschiene 20 hervorgerufen wird.

Weiter ist in Fig. 5 noch erkennbar, dass die Rastflächen 14, 15 bezogen auf die ihnen zugeordneten Seitenwände 5, 6 jeweils einen Schrägungswinkel α aufweisen, der vorteilhaft in einem Bereich von einschließlich 30° bis einschließlich 60° liegt, und der im gezeigten bevorzugten Ausführungsbeispiel zumindest näherungsweise 45° beträgt. Die von den Rastvertiefungen 11, 12 ausgehenden und zur Einfädelöffnung 4 des Kettenschutzes 3 hin verlaufenden Einfädelschrägen 16, 17 können bezogen auf die Längsachse 9 im gezeigten Längsschnitt einen geradlinigen oder konvex gekrümmten Verlauf aufweisen, sind aber im gezeigten bevorzugten Ausführungsbeispiel konkav gekrümmt. Die hier gewählten Begriffe "konvex" und "konkav" bezeichnen die Krümmungs- bzw. Wölbungsform auf der Innenseite des Kettenschutzes 3, also dort, wo die Einfädelschrägen 16, 17 ihre Funktion als Einfädelhilfe für die jeweilige Schneidgarnitur 2, 2' ausüben. Dabei weisen die Einfädelschrägen 16, 17 bezogen auf die ihnen jeweils zugeordneten Seitenwände 5, 6 einen mittleren Schrägungswinkel β auf, der vorteilhaft in einem Bereich von einschließlich 5° bis einschließlich 20° liegt und im gezeigten bevorzugten Ausführungsbeispiel zumindest näherungsweise 10° beträgt.

Fig. 6 zeigt in einer Detaildarstellung die Anordnung nach Fig. 4 im Bereich der Einfädelöffnung 4 mit Einzelheiten zur Ausgestaltung der Zentriervertiefungen 19 und des Einfädeltrichters 18. Die Zentriervertiefungen 19 sind für die Anlage an einer der Seitenflächen 7, 8 oder an beiden Seitenflächen 7, 8 der Führungsschiene 20 vorgesehen, wodurch sie eine Zentrierung des Kettenschutzes 3 gegenüber der jeweils eingeführten Schneidgarnitur 2, 2' in der Seitenrichtung bzw. in der Dickenrichtung der Führungsschiene 20 herbeiführen. Zwischen den beiden Zentriervertiefungen 19 verbleibt ein freier Abstand a, für den das Gleiche wie für den freien Abstand a zwischen den Rastvertiefungen 11 bzw. Rastvertiefungen 12 nach Fig. 5 gilt. Auch hier kann optional der freie Abstand a größer, gleich oder geringfügig kleiner als die Dicke d der Führungsschiene 20 sein, so dass sich zumindest in letzterem Falle eine Klemmwirkung zwischen den Zentriervertiefungen 19 und den Seitenflächen 7, 8 der Führungsschiene 20 ergibt.

In jedem Falle ist der freie Abstand a zwischen den beiden Zentriervertiefungen 19 kleiner als die Breite b (Fig. 5) der Schneidkette 13, 13', so dass die Schneidkette 13, 13' beim Einführen der Schneidgarnitur 2, 2' in den Kettenschutz 3 nicht unmittelbar nach vorne zu der zugeordneten Rastvertiefung 11, 12 geschoben werden kann. Vielmehr wird die Schneidkette 13, 13' beim Einfädelvorgang mittels des Einfädeltrichters 18 zunächst gegenüber den Zentriervertiefungen 19 mittig ausgerichtet. Beim weiteren Einfädeln bewirkt der Einfädeltrichter 18 ein Aufspreizen des Kettenschutzes 3 im Bereich der Zentriervertiefungen 19. Hierdurch wird der tatsächliche Abstand zwischen den Zentriervertiefungen 19 gegenüber ihrem freien, ungestörten Abstand a durch elastische Verformung so weit vergrößert, dass die Schneidgarnitur 2, 2' mit ihrer jeweiligen Schneidkette 13, 13' zwischen den Zentriervertiefungen 19 hindurch geschoben werden kann. Nach dem Passieren der breiteren Schneidkette 13, 13' schnappen die Zentriervertiefungen 19 elastisch zurück auf ihren freien, ungestörten Abstand a, wobei sie dann an den Seitenwänden 7, 8 zu liegen kommen und ihre oben beschriebene Zentrierfunktion ausüben. Außerdem ist in Fig. 6 noch zu erkennen, dass der Einfädeltrichter 18 unmittelbar in die Zentriervertiefungen 19 übergeht. Es kann aber auch zweckmäßig sein, dass zwischen dem Einfädeltrichter 18 und den Zentriervertiefungen 19 in Längsrichtung ein Abstand verbleibt.

Die Figuren 7 und 8 zeigen die Anordnung nach den Figuren 3 und 4, wobei der gleiche Kettenschutz 3 auf eine Schneidgarnitur 2' mit im Vergleich zu den Figuren 3 und 4 kürzerer Länge L' aufgeschoben ist. Die Schneidkette 13' ist in ihrer Länge an die kürzere Länge L' der Führungsschiene 20' angepasst, wird aber in gleicher Weise um das freie Ende 21' mit dem gleichen ersten Radius R umgelenkt.

Aus der Zusammenschau der Figuren 7 und 8 ist erkennbar, dass infolge der kürzeren Länge L' nicht die vordere, erste Rastvertiefung 11, sondern die zweite, hintere Rastvertiefung 12 bei ansonsten gleicher Position des Kettenschutzes 3 rastend hinter der Schneidkette 13' am weiter hinten liegenden freien Ende 21' der Führungsschiene 20' bzw. der Schneidgarnitur 2' zu liegen kommt und dort den Kettenschutz 3 rastend an der kürzeren Schneidgarnitur 2' hält. Da entsprechend obiger Beschreibung die zweite, hintere Rastvertiefung 12 geometrisch analog zur ersten, vorderen Rastvertiefung 11 ausgestaltet ist, und da außerdem der Abstand zwischen den Rastvertiefungen 11, 12 gleich der Differenz zwischen den Längen L, L' der Schneidgarnituren 2, 2' ist, bilden sich hier die gleichen Verhältnisse bei der Lagesicherung aus, wie sie im Zusammenhang mit den Figuren 3 bis 6 beschrieben sind. Der einzige Unterschied besteht darin, dass die rastende Halterung in Längsrichtung nicht durch die vorderen Rastflächen 14, sondern durch die hinteren Rastflächen 15 herbeigeführt wird. Im Übrigen bleiben die Verhältnisse gleich. Dies gilt insbesondere auch für die Klemmwirkung zwischen den hinteren Rastvertiefungen 12 an den Seitenflächen 7, 8 der Führungsschiene 20' und auch für die Zentrierwirkung zwischen den Zentriervertiefungen 19 im Bereich des Einfädeltrichters 18.

Sofern nicht abweichend beschrieben, gelten im Übrigen für die Anordnung nach den Figuren 7 und 8 die gleichen Merkmale und Bezugszeichen wie bei der Anordnung nach den Figuren 2 bis 6.

## Patentansprüche

1. Kettenschutz (3) für verschiedene, auswechselbare und unterschiedliche Längen (L, L') aufweisende Schneidgarnituren (2, 2') einer Kettensäge (1), wobei der Kettenschutz (3) eine Einfädelöffnung (4) für die Schneidgarnitur (2) aufweist und im Übrigen als geschlossener Kasten mit zwei sich gegenüberliegenden Seitenwänden (5, 6) zur Abdeckung von Seitenflächen (7, 8) der Schneidgarnitur (2, 2') ausgebildet ist, wobei der Kettenschutz (3) bezogen auf seine Längsachse (9) ein vorderes, der Einfädelöffnung (4) gegenüberliegendes Ende (10) aufweist, und in mindestens einer Seitenwand (5, 6) des Kettenschutzes (3) im Bereich seines vorderen Endes (10) eine erste Rastvertiefung (11) und in Richtung zur Einfädelöffnung (4) mit Abstand zur ersten Rastvertiefung (11) mindestens eine zweite Rastvertiefung (12) ausgebildet sind, **dadurch gekennzeichnet, dass**, die erste Rastvertiefung (11) und die zweite Rastvertiefung (12) zum vorderen Ende (10) des Kettenschutzes (3) hin je eine bogenförmige Rastfläche (14, 15) zur formschlüssigen, in Richtung der Längsachse (9) des Kettenschutzes (3) wirkenden Verrastung mit Schneidketten (13, 13') der Schneidgarnituren (2, 2') unterschiedlicher Längen (L, L') aufweisen.

2. Kettenschutz nach Anspruch 1,
**dadurch gekennzeichnet, dass** in beiden Seitenwänden (5, 6) des Kettenschutzes (3) jeweils sich gegenüberliegende erste Rastvertiefungen (11) und zweite Rastvertiefungen (12) ausgebildet und bevorzugt spiegelsymmetrisch zueinander angeordnet sind.

3. Kettenschutz nach Anspruch 1 oder 2,
**dadurch gekennzeichnet, dass** die bogenförmige Rastfläche (14, 15) kreisbogenförmig ist.

4. Kettenschutz nach Anspruch 3,
**dadurch gekennzeichnet, dass** die Rastfläche (14, 15) bezogen auf die zugeordnete Seitenwand (5, 6) einen Schrägungswinkel (α) aufweist, der in einem Bereich von einschließlich 30° bis einschließlich 60° liegt und insbesondere zumindest näherungsweise 45° beträgt.

5. Kettenschutz nach einem der Ansprüche 1 bis 4,
**dadurch gekennzeichnet, dass** die erste Rastvertiefung (11) und/oder die zweite Rastvertiefung (12) zur Einfädelöffnung (4) des Kettenschutzes (3) hin eine Einfädelschräge (16, 17) aufweisen.

6. Kettenschutz nach Anspruch 5,
**dadurch gekennzeichnet, dass** die Einfädelschräge (16, 17) bezogen auf die zugeordnete Seitenwand (5, 6) einen mittleren Schrägungswinkel (β) aufweist, der in einem Bereich von einschließlich 5° bis einschließlich 20° liegt und insbesondere zumindest näherungsweise 10° beträgt.

7. Kettenschutz nach Anspruch 5 oder 6,
**dadurch gekennzeichnet, dass** die Einfädelschräge (16, 17) konkav gekrümmt ist.

8. Kettenschutz nach einem der Ansprüche 1 bis 7,
**dadurch gekennzeichnet, dass** der Kettenschutz (3) ausgehend von seiner Einfädelöffnung (4) einen den Querschnitt des Kettenschutzes (3) verengenden Einfädeltrichter (18) aufweist.

9. Kettenschutz nach einem der Ansprüche 1 bis 8,
**dadurch gekennzeichnet, dass** in mindestens einer Seitenwand (5, 6) und bevorzugt in beiden Seitenwänden (5, 6) des Kettenschutzes (3) im Bereich seiner Einfädelöffnung (4) Zentriervertiefungen (19) ausgebildet sind, wobei die Zentriervertiefungen (19) zur seitlichen Anlage an den Seitenflächen (7, 8) der Schneidgarnitur (2, 2') vorgesehen sind.

10. Kettenschutz nach Anspruch 8 und 9,
**dadurch gekennzeichnet, dass** sich der Einfädeltrichter (18) ausgehend von der Einfädelöffnung (4) bis zur Zentriervertiefung (19) erstreckt.

11. Kettensägensystem, umfassend eine Kettensäge (1) mit verschiedenen, auswechselbaren und unterschiedliche Längen (L, L') aufweisenden Schneidgarnituren (2, 2') sowie einen Kettenschutz (3) nach einem der Ansprüche 1 bis 10.

12. Kettensägensystem nach Anspruch 11,
**dadurch gekennzeichnet, dass** die Schneidgarnituren (2, 2') Führungsschienen (20, 20') mit umlaufenden Schneidketten (13, 13') umfassen, wobei die Schneidketten (13, 13') eine Breite (b) aufweisen, wobei zwischen sich gegenüberliegenden ersten Rastvertiefungen (11) bzw. zweiten Rastvertiefungen (12) ein freier Abstand (a) verbleibt, der kleiner ist als die Breite (b) der Schneidkette (13, 13').

13. Kettensägensystem nach Anspruch 12,
**dadurch gekennzeichnet, dass** die Führungsschienen (20, 20') eine Dicke (d) aufweisen, und dass der freie Abstand (a) kleiner ist als die Dicke (d) der Führungsschiene (20, 20').

14. Kettensägensystem nach einem der Ansprüche 11 bis 13,
**dadurch gekennzeichnet, dass** die Führungsschienen (20, 20') jeweils ein freies Ende (21,21') zur Umlenkung der Schneidkette (13, 13') mit einem in der seitlichen Draufsicht ersten Radius (R, R') aufweisen, und dass die Rastflächen (14, 15) in der seitlichen Draufsicht auf die zugeordnete Seitenwand (5, 6) einen zweiten Radius (r, r') aufweisen, wobei der zweite Radius (r, r') ≤ dem ersten Radius (R, R') ist.

## Claims

1. Chain guard (3) for different, exchangeable cutting attachments (2, 2') of different lengths (L, L'), of a chain saw (1), wherein the chain guard (3) has a feed-in opening (4) for the cutting attachment (2) and is besides formed as a closed box with two opposing side walls (5, 6) to cover side faces (7, 8) of the cutting attachment (2, 2'), wherein the chain guard (3) has, with respect to its longitudinal axis (9), a front end (10) lying opposite the feed-in opening (4), and one first detent depression (11) is formed in at least one side wall (5, 6) of the chain guard (3) in the region of its front end (10), and at least one second detent depression (12) is formed in the direction towards the feed-in opening (4) at a distance from the first detent depression (11),
**characterised in that** the first detent depression (11) and the second detent depression (12) each have, towards the front end (10) of the chain guard (3), a curved detent area (14, 15) for positively locking engagement, acting in the direction of the longitudinal axis (9) of the chain guard (3), with cutting chains (13, 13') of the cutting attachments (2, 2') of different lengths (L, L').

2. Chain guard according to claim 1,
**characterised in that** opposing first detent depressions (11) and second detent depressions (12) are formed in both side walls (5, 6) of the chain guard (3) and are preferably arranged mirror-symmetrically with respect to each other.

3. Chain guard according to claim 1 or 2,
**characterised in that** the curved detent area (14, 15) is shaped like the arc of a circle.

4. Chain guard according to claim 3,
**characterised in that** the detent area (14, 15) has, with respect to the assigned side wall (5, 6), a helix angle (α) which lies in a range of from 30° to 60° inclusive and in particular is at least approximately 45°.

5. Chain guard according to one of claims 1 to 4,
**characterised in that** the first detent depression (11) and / or the second detent depression (12) has / have, towards the feed-in opening (4) of the chain guard (3), a feed-in sloping area (16, 17).

6. Chain guard according to claim 5,
**characterised in that** the feed-in sloping area (16, 17) has, with respect to the assigned side wall (5, 6), an average helix angle (β) which lies in a range of from 5° to 20° inclusive, and in particular is at least approximately 10°.

7. Chain guard according to claim 5 or 6,
**characterised in that** the feed-in sloping area (16, 17) is curved concavely.

8. Chain guard according to one of claims 1 to 7,
**characterised in that** the chain guard (3) has, starting from its feed-in opening (4), a feed-in funnel (18) narrowing the cross-section of the chain guard (3).

9. Chain guard according to one of claims 1 to 8,
**characterised in that** centring depressions (19) are formed in at least one side wall (5, 6) and preferably in both side walls (5, 6) of the chain guard (3) in the region of its feed-in opening (4), wherein the centring depressions (19) are provided for lateral abutment against the side faces (7, 8) of the cutting attachment (2, 2').

10. Chain guard according to claims 8 and 9,
**characterised in that** the feed-in funnel (18) extends starting from the feed-in opening (4) as far as the centring depression (19).

11. Chain saw system comprising a chain saw (1) with different, exchangeable cutting attachments (2, 2') of different lengths (L, L'), as well as a chain guard (3) according to one of claims 1 to 10.

12. Chain saw system according to claim 11,
**characterised in that** the cutting attachments (2, 2') comprise guide rails (20, 20') with circumferential cutting chains (13, 13'), wherein the cutting chains (13, 13') have a width (b), wherein a free distance (a) remains between opposing first detent depressions (11) or second detent depressions (12), the free distance (a) being smaller than the width (b) of the cutting chain (13, 13').

13. Chain saw system according to claim 12,
**characterised in that** the guide rails (20, 20') have a thickness (d) and the free distance (a) is smaller than the thickness (d) of the guide rail (20, 20').

14. Chain saw system according to one of claims 11 to 13,
**characterised in that** the guide rails (20, 20') each have a free end (21,21') for deflection of the cutting chain (13, 13') with a first radius (R, R') in the lateral top view, and the detent areas (14, 15) have a second radius (r, r') in the lateral top view onto the assigned side wall (5, 6), wherein the second radius (r, r') ≤ the first radius (R, R').

## Revendications

1. Protection (3) pour différents ensembles de coupe (2, 2') d'une scie à chaîne (1) qui sont remplaçables et présentent différentes longueurs (L, L'), la protection de chaîne (3) présentant une ouverture d'introduction (4) pour l'ensemble de coupe (2) et étant par ailleurs conçue comme un boîtier fermé, avec deux parois latérales (5, 6) disposées face à face, destinées à couvrir les surfaces latérales (7, 8) de l'ensemble de coupe (2, 2'), la protection de chaîne (3) présentant, par rapport à son axe longitudinal (9), une extrémité avant (10) opposée à l'ouverture d'introduction (4), et un premier creux d'enclenchement (11) étant formé dans au moins une paroi latérale (5, 6) de la protection de chaîne (3), dans la zone de l'extrémité avant (10) de celle-ci, tandis qu'au moins un second creux d'enclenchement (12) est prévu à une certaine distance du premier creux d'enclenchement (11), en direction de l'ouverture d'introduction (4), **caractérisée en ce que** le premier creux d'enclenchement (11) et le second creux d'enclenchement (12) présentent chacun, en direction de l'extrémité avant (10) de la protection de chaîne (3), une surface d'enclenchement courbe (14, 15) pour l'enclenchement par complémentarité de forme, agissant dans le sens de l'axe longitudinal (9) de la protection de chaîne (3), avec les chaînes de coupe (13, 13') des ensembles de coupe (2, 2') de différentes longueurs (L, L').

2. Protection de chaîne selon la revendication 1,
**caractérisée en ce que** des premiers creux d'enclenchement (11) et des seconds creux d'enclenchement (12) qui se font face sont prévus respectivement dans les deux parois latérales (5, 6) de la protection de chaîne (3), et sont disposés de préférence en miroir.

3. Protection de chaîne selon la revendication 1 ou 2,
**caractérisée en ce que** la surface d'enclenchement courbe (14, 15) a la forme d'un arc de cercle.

4. Protection de chaîne selon la revendication 3,
**caractérisée en ce que** la surface d'enclenchement (14, 15) présente par rapport à la paroi latérale (5, 6) associée un angle d'inclinaison (α) qui est situé dans une plage de 30° inclus à 60° inclus, et qui est en particulier au moins approximativement de 45°.

5. Protection de chaîne selon l'une des revendications 1 à 4,
**caractérisée en ce que** le premier creux d'enclenchement (11) et/ou le second creux d'enclenchement (12) présentent un biseau d'introduction (16, 17) en direction de l'ouverture d'introduction (4) de la protection de chaîne (3).

6. Protection de chaîne selon la revendication 5,
**caractérisée en ce que** le biseau d'introduction (16, 17) présente par rapport à la paroi latérale (5, 6) associée un angle d'inclinaison moyen (β) qui est situé dans une plage de 5° inclus à 20° inclus, et qui est en particulier au moins approximativement de 10°.

7. Protection de chaîne selon la revendication 5 ou 6,
**caractérisée en ce que** le biseau d'introduction (16, 17) est concave.

8. Protection de chaîne selon l'une des revendications 1 à 7,
**caractérisée en ce que** la protection de chaîne (3) présente à partir de son ouverture d'introduction (4) un cône d'introduction (18) qui rétrécit la section transversale de ladite protection de chaîne (3).

9. Protection de chaîne selon l'une des revendications 1 à 8,
**caractérisée en ce que** dans au moins une paroi latérale (5, 6) et de préférence dans les deux parois latérales (5, 6) de la protection de chaîne (3), des creux de centrage (19) sont formés dans la zone de l'ouverture d'introduction (4) de ladite protection de chaîne (3), les creux de centrage (19) étant destinés à être appliqués latéralement contre les surfaces latérales (7, 8) de l'ensemble de coupe (2, 2').

10. Protection de chaîne selon les revendications 8 et 9,
**caractérisée en ce que** le cône d'introduction (18) s'étend à partir de l'ouverture d'introduction (4) jusqu'au creux de centrage (19).

11. Système de scie à chaîne comprenant une scie à chaine (1) avec différents ensembles de coupe (2, 2') qui sont remplaçables et présentent différentes longueurs (L, L'), et une protection de chaîne (3) selon l'une des revendications 1 à 10.

12. Système de scie à chaîne selon la revendication 11,
**caractérisé en ce que** les ensembles de coupe (2, 2') comprennent des rails de guidage (20, 20') avec des chaînes de coupe sans fin (13, 13'), les chaînes de coupe (13, 13') présentant une largeur (b) et, entre les premiers creux d'enclenchement (11) qui se font face et entre les seconds creux d'enclenchement (12) qui se font face, un écartement libre (a) restant qui est inférieur à la largeur (b) de la chaîne de coupe (13, 13').

13. Système de scie à chaîne selon la revendication 12,
**caractérisé en ce que** les rails de guidage (20, 20') présentent une épaisseur (d), et **en ce que** l'écartement libre (a) est inférieur à l'épaisseur (d) du rail de guidage (20, 20').

14. Système de scie à chaîne selon l'une des revendications 11 à 13,
**caractérisé en ce que** les rails de guidage (20, 20') présentent chacun une extrémité libre (21, 21') pour le renvoi de la chaîne de coupe (13, 13'), avec un premier rayon (R, R'), vu latéralement, et **en ce que** les surfaces d'enclenchement (14, 15) présentent un second rayon (r, r'), sur une vue latérale de la paroi latérale (5, 6) associée, le second rayon (r, r') étant β au premier rayon (R, R').
